Europäisches Patentamt

European Patent Office

Office européen des brevets

(19)

(11) Veröffentlichungsnummer: **0 354 983**

**A2**

(12) **˙EUROPÄISCHE PATENTANMELDUNG**

(21) Anmeldenummer: 89110344.2

(51) Int. Cl.⁴: **A61C 13/16**

(22) Anmeldetag: 08.06.89

(30) Priorität: 16.08.88 DE 3827637

(43) Veröffentlichungstag der Anmeldung:
21.02.90 Patentblatt 90/08

(84) Benannte Vertragsstaaten:
**AT BE CH DE ES FR GB GR IT LI LU NL SE**

(71) Anmelder: **SCHUTZ- DENTAL GMBH**
**Homburger Strasse 64**
**D-6365 Rosbach 1(DE)**

(72) Erfinder: **Wagner, Markus**
**Friedensstrasse 1**
**D-6380 Bad Homburg(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) **Verfahren zur Erzeugung einer Gussform für eine Modellprothese sowie Küvette zu seiner Durchführung.**

(57) Eine Küvette hat einen in sie von oben her einsetzbaren Boden (9) und einen von oben her teleskopartig einschiebbaren Deckel (10). Der Boden (9) sitzt auf Lappen (5 -8) am unteren Rand einer als Spannband ausgebildeten Manschette (1) der Küvette. Beim Doublieren wird das Arbeitsmodell auf diesen Boden (9) gesetzt. Zum Überbetten, also zur Herstellung der Gußform, wird das zuvor in der Küvette erzeugte Einbettmassemodell anstelle des Bodens (9) in die Küvette eingesetzt. Die Küvette ist somit Doublierform und Muffelformer.

Xerox Copy Centre

# Verfahren zur Erzeugung einer Gußform für eine Modellprothese sowie Küvette zu seiner Durchführung

Die Erfindung bezieht sich auf ein Verfahren zur Erzeugung einer Gußform für eine Modellgußprothese, bei welchem in einer aus einem Boden, einer mit diesem lösbar verbindbaren Manschette und einem teleskopartig in die Manschette einsetzbaren Deckel bestehenden Küvette vom aus dem Abdruck im Mund erzeugten Arbeitsmodell eine Doublierung (= Negativform) und anschließend mit der Doublierung ein Einbettmassemodell (= Positivform) und mit diesem zuletzt eine Gußform (= Negativmodell) aus feuerfestem Material erzeugt wird. Weiterhin betrifft die Erfindung eine Küvette zur Durchführung dieses Verfahrens.

In der dentalen Modellgußtechnik wird zunächst durch Ausgießen des im Mund des Patienten erzeugten Abdruckes ein Arbeitsmodell hergestellt. Von diesem fertigt man eine Doublierung an, bei der es sich um eine Negativform aus Silikon handelt. Zur Herstellung dieser Doublierung verwendet man eine Doublierküvette, welche üblicherweise aus einer spannbandartigen Manschette, einem darin einsetzbaren Boden und einem teleskopisch einschiebbaren Deckel besteht. Diese Doublierung wird anschließend mit Einbettmasse ausgegossen, so daß ein Einbettmassemodell entsteht. Dieses ist dann zu modellieren, mit Gußkanälen zu versehen und anschließend in einem Muffelformer mit einer feuerfesten Masse zu überbetten. Die Überbettung bildet dann die Gußform.

Zur Durchführung der vorgenannten Arbeitsgänge hat man bislang eine Doublierküvette und einen Muffelformer benötigt. Eine solche Doublierküvette ist beispielsweise in dem DE-GM 87 15 862.0 beschrieben. Ein Muffelformer ist in dem DE-GM 88 04 583.8 gezeigt. Ein Vergleich des Muffelformers mit der Doublierküvette zeigt, daß beide Vorrichtungen im Aufbau ähnlich sind.

Es ist zwar in der Praxis auch schon bekannt, statt eines als Behälter ausgebildeten Muffelformers eine Papiermanschette um das Einbettmassemodell zu legen. Diese Verfahrensweise ist jedoch zeitaufwendig und erfordert besondere sorgfalt bei ihrer Durchführung.

Der Erfindung liegt die Aufgabe zugrunde, ein Verfahren der eingangs genannten Art so weiterzubilden, daß es mit möglichst geringem Aufwand und damit mit möglichst geringen Kosten durchgeführt werden kann. Weiterhin soll eine spezielle Küvette zur Durchführung dieses Verfahrens gefunden werden.

Die erstgenannte Aufgabe wird erfindungsgemäß dadurch gelöst, daß ein und dieselbe Küvette zunächst mit eingesetztem Boden, darauf gesetztem Arbeitsmodell und eingeschobenem Deckel zur Erzeugung der Doublierung verwendet und anschließend zur Erzeugung des Einbettmassemodelles der Deckel mit der eine Silikonform bildenden Doublierung in umgekehrter Richtung anstelle des Bodens in die Manschette gesetzt und diese dann mit Einbettmasse ausgegossen wird und daß danach das so erzeugte Einbettmassemodell der Silikonform entnommen und als Boden in die Manschette eingesetzt wird, so daß die Manschette dann als Muffelformer zu dienen vermag.

Durch diese erfindungsgemäße Verfahrensweise kann eine einzige Küvette als Form für alle zur Herstellung einer Modellgußform erforderlichen Arbeitsgänge verwendet werden. Dadurch ist anstelle der bisher erforderlichen zwei Küvetten nur noch eine einzige Küvette erforderlich, so daß das erfindungsgemäße Verfahren kostengünstiger durchgeführt werden kann als das bisherige. Weiterhin führt das erfindungsgemäße Verfahren zu genaueren Modellgußmodellen, weil alle Arbeitsgänge in nur einer einzigen Form erfolgen. Obendrein sind die Fehlermöglichkeiten geringer als bei der bisherigen Verfahrensweise.

Die zweitgenannte Aufgabe, nämlich die Schaffung einer Küvette zur Durchführung dieses Verfahrens, wird erfindungsgemäß dadurch gelöst, daß die Manschette einen zum teilweisen Untergreifen des Bodens ausgebildeten, nach innen gerichteten, flanschartigen Rand oder entsprechende Lappen hat. Eine solche Küvette ist sehr einfach aufgebaut und deshalb kostengünstig herstellbar.

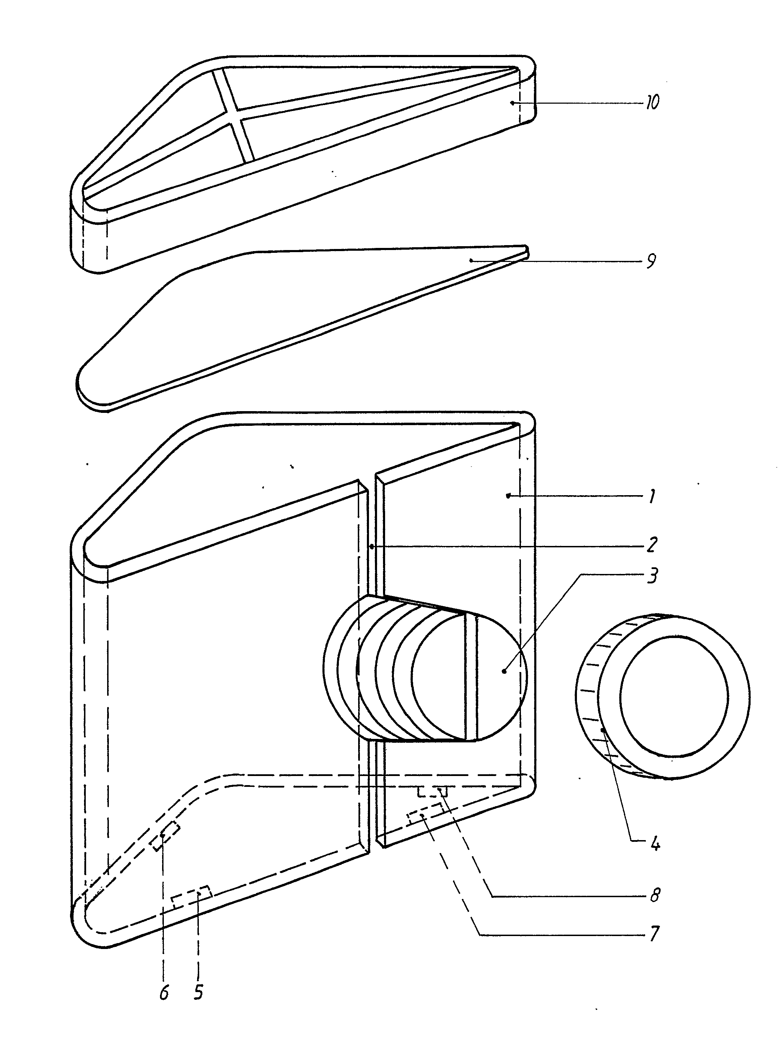

Zur weiteren Verdeutlichung der Erfindung ist in der Zeichnung eine zur Durchführung des erfindungsgemäßen Verfahrens zu verwendende Küvette perspektivisch in Explosionsdarstellung gezeigt und wird nachfolgend beschrieben.

Die dargestellte Küvette hat eine als Spannband ausgebildete Manschette 1, welche durch eine Trennfuge 2 über ihre gesamte Höhe geschlitzt ist. Diese Trennfuge 2 verläuft mittig durch einen Gewindezapfen 3. Eine Spannmutter 4 läßt sich derart auf den Gewindezapfen 3 schrauben, daß seine beiden durch die Trennfuge 2 gebildeten Gewindezapfenhälften dadurch zusammengedrückt werden, wodurch die Manschette 1 unter Verringerung der Breite ihrer Trennfuge 2 gespannt wird.

Im unteren Bereich hat die Manschette 1 nach innen ragende, gestrichelt dargestellte Lappen 5 - 8 oder einen nicht gezeigten, umlaufenden, flanschartigen Rand. Auf diese Lappen 5 - 8 läßt sich ein von oben her in die Manschette 1 einschiebbarer Boden 9 auflegen. Ebenfalls von oben her läßt sich in die Manschette 1 ein von Doublierküvetten her bekannter Deckel 10 teleskopartig einsetzen.

Soll eine Modellgußform erzeugt werden, so setzt man zunächst den Boden 9 in die Manschette 1. Auf diesen setzt man das durch Ausgießen des im Mund des Patienten gewonnene Arbeitsmodell und hält es in eine mittige Position durch ein vorangegangenes Umwickeln mit einem Doublierschwämmchen. Danach wird die Spannmutter 4 festgezogen und der Deckel von oben her bis auf das Schwämmchen gedrückt. Anschließend kann die Doubliermasse eingefüllt werden.

Nach dem Aushärten ist die Küvette zu öffnen und der Deckel mit der Doublierung zu entnehmen. Danach wird die Doublierform nach oben weisend anstelle des Bodens in die Manschette eingesetzt, die Manschette mit der Spannmutter 4 wieder geschlossen und Einbettmasse eingegeben, so daß ein Einbettmassemodell entsteht.

Auf dem Einbettmassemodell wird auf übliche Weise modelliert und dann mit den Zähnen nach oben weisend wiederum anstelle des Bodens in die Manschette 1 eingesetzt. Die Manschette 1 bildet nun nach dem Spannen mit der Spannmutter 4 einen Muffelformer, so daß in sie die Einbettmasse gegeben werden kann.

Auflistung der verwendeten Bezugszeichen

1 Manschette
2 Trennfuge
3 Gewindezapfen
4 Spannmutter
5 Lappen
6 Lappen
7 Lappen
8 Lappen
9 Boden
10 Deckel

**Ansprüche**

1. Verfahren zur Erzeugung einer Gußform für eine Modellgußprothese, bei welchem in einer aus einem Boden, einer mit diesem lösbar verbindbaren Manschette und einem teleskopartig in die Manschette einsetzbaren Deckel bestehenden Küvette vom aus dem Abdruck im Mund erzeugten Arbeitsmodell eine Doublierung ( = Negativform) und anschließend mit der Doublierung ein Einbettmassemodell ( = Positivform) und mit diesem zuletzt eine Gußform ( = Negativmodell) aus feuerfestem Material erzeugt wird, dadurch gekennzeichnet, daß ein und dieselbe Küvette zunächst mit eingesetztem Boden, darauf gesetztem Arbeitsmodell und eingeschobenem Deckel zur Erzeugung der Doublierung verwendet und anschließend zur Erzeugung des Einbettmassemodelles der Deckel mit der eine Silikonform bildenden Doublierung in umgekehrter Richtung anstelle des Bodens in die Manschette gesetzt und diese dann mit Einbettmasse ausgegossen wird und daß danach das so erzeugte Einbettmassemodell der Silikonform entnommen und als Boden in die Manschette eingesetzt wird, so daß die Manschette dann als Muffelformer zu dienen vermag.

2. Küvette zur Erzeugung von Modellen in der dentalen Modellgußtechnik nach dem Verfahren gemäß Anspruch 1, welche eine als Spannband ausgebildete Manschette, einen Boden und einen in die den Boden umfassende Manschette teleskopartig einsetzbaren Deckel aufweist, welcher Öffnungen zum Eingießen von Doubliermasse hat, dadurch gekennzeichnet, daß die Manschette (1) einen zum teilweisen Untergreifen des Bodens (9) ausgebildeten, nach innen gerichteten, flanschartigen Rand oder entsprechende Lappen (5 - 8) hat.